# EUROPEAN PATENT APPLICATION

(11) **EP 0 527 710 A2**
(43) Date of publication of application: **17.02.1993**
(21) Application number: 92830424.5
(22) Date of filing: 30.07.1992
(51) Int. Cl.: A01K 91/03, A01K 93/00

(54) **Fishing equipment permitting rapid replacement of components - floats, weights, and others - on the line**

(30) Priority: 08.08.1991 IT FI910204
(71) Applicant: Dogliosi, Massimo, I-51030 Serravalle Pistoiese (Pistoia) (IT)
(72) Inventor: Dogliosi, Massimo, I-51030 Serravalle Pistoiese (Pistoia) (IT)
(74) Representative: Mannucci, Gianfranco, Dott.-Ing.

(57) **Abstract**

Angling equipment comprising a float and weights and/or a "torpedo" on the line; to enable a component such as a float (21) to be replaced, the line (L) is disposed outside the component; auxiliary annular elements in the form of silicone rings (23, 25, 27) are slidably attached to the line (L) and the said rings are threaded on extensions (21A, 21B) of the float (21) to be placed on the line from time to time.

## Description

In fishing with a line equipped with a float, a distinction is usually made between static and active fishing. In static fishing, the angler selects his position which is normally unchanged throughout the fishing period; he therefore prepares a line which in his judgement is the best with respect to the following considerations: the depth of the water, the speed of the current, the distance at which the fish are to be enticed, and atmospheric agents. In active fishing, on the other hand, the angler frequently moves along the river and has to carry out his activities in different areas, each of which might ultimately require a different line; in fact, in these cases, the angler prepares a line which on average can perform well in the different places in which he intends to fish, thus avoiding an excessive expenditure of time in changing lines with each move, even though the prepared line may not be the ideal type in most of the places in which he fishes. Everything stated above concerning active fishing may also be true of static fishing, in relation to variations in atmospheric factors (wind, humidity, rain) and, in the case of sea and estuary fishing, in relation to the phases of the tide and the associated currents.

To summarise, a line prepared at the start of a fishing expedition may subsequently prove to be unsuitable. The preparation of a new line is relatively difficult, and in the common view of the amateur angler this means the loss of precious time from his hobby. Furthermore, in certain situations the replacement of the line becomes rather problematic, for example in the case of night fishing from a rocky or uneven shore.

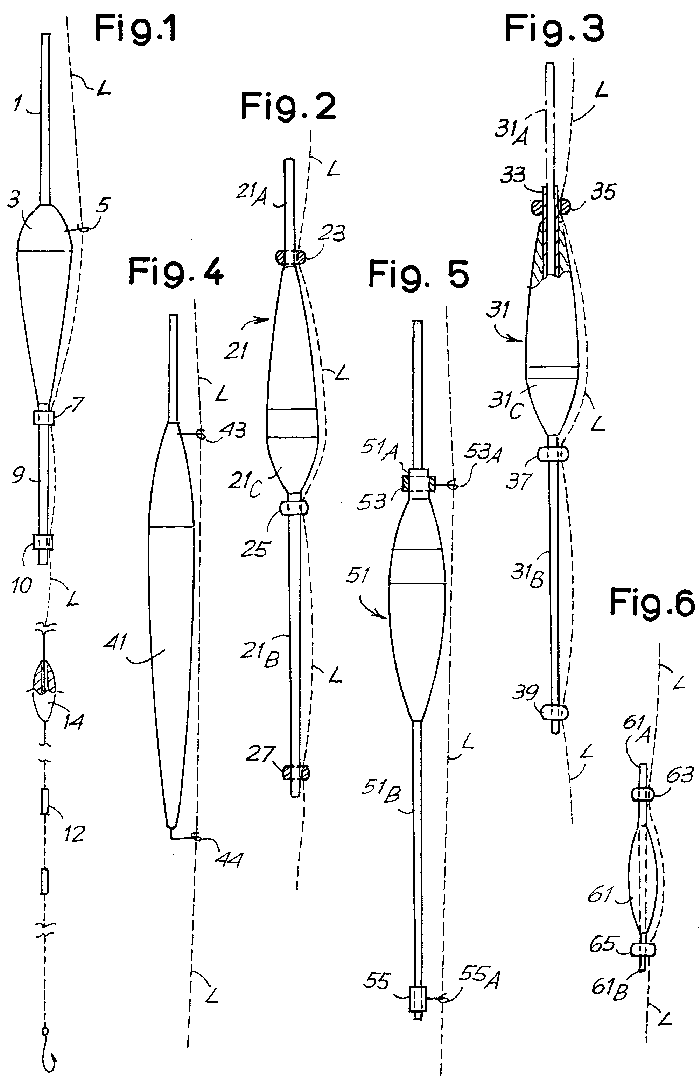

The elements of a traditional fishing line are the line itself, a hook, a float and a weight. Irrespective of its shape - now virtually standardised - the float is fixed to the line in such a way that it cannot easily be removed from the line. With reference to Fig. 1, the float has an upper indicator stick 1, the body 3, a metal line guide eye 5, fixed so that it projects from the body 3, a silicone ring 7, a lower stem or tail 9, and a further silicone ring 10. The indicator stick 1 is generally made of semi-rigid plastic with a very small diameter; it is inserted in the body 3 of the float (which is normally made of balsa wood) and fixed with adhesive; the same is true of the tail 9, which is made of wood or metal. The float is placed on the line L by passing the line (made of nylon or other material) through the metal eye 5 and between the two silicone rings 7 and 10, which are then secured on the tail 9 in the positions shown in Fig. 1, with a suitable degree of friction.

The float may be made to slide along the line L, but cannot be removed from it except by cutting the line L or making it slide along it to its end, provided that the line has no other obstructions, a condition not normally present.

The weight consists of split shot or small cylinders 12 which are tightened on the line, being distributed in various ways; recently, in a system which has become very widespread in the last few years, a so-called torpedo, a weight 14, having a shape similar to a teardrop with a central hole through which the line L is passed, has been added to the shot or cylinders 12.

Obviously, floats, torpedoes and shot may have a very wide range of sizes with corresponding markings. The capacity of the most commonly used floats is from a few tenths of a gram to 10 grams; torpedoes vary similarly and in the same proportion. Thus, assuming a float capacity of three grams, a line such as that shown in Fig. 1 will have a torpedo with a weight which may vary from one to two grams, combined with a certain number of shot, each weighing from 0.10 g to 0.20 g. By preparing a line of this type it is evident from what has been stated previously that there is no possibility of modification: indeed, none of its components, particularly the float 1-10 and the torpedo 14, can be removed except by cutting the line to reconstruct it with other components; alternatively, a plurality of lines must be prepared for use as necessary, although this still requires complicated operations and occupies a considerable amount of space.

The object of the invention is to provide a very simple line preparation operation in accordance with the requirements at any one time. With the object of enabling a component to be replaced, the equipment according to the invention - requiring the use of components (acting as floats and weights) on the line - basically provides for:
- the disposition of the line outside the component itself;
- the slidable attachment of auxiliary annular elements to the line; and
- the threading of the said auxiliary annular elements on extensions of the component to be mounted on the line from time to time.

In one embodiment, the said auxiliary annular elements are silicone rings - or similar or equivalent elements - through which the line is made to pass and which are force-threaded on the said extensions; in this way the rings and the component (float, torpedo, or other component) are attached to the line without relative sliding.

At least one of the extensions may be a tubular collar which is formed by the component itself appropriately inserted in the component; this collar is used to attach the ring at this point and also in turn forms a holder for the frictional attachment of an indicator stick or other component, which is thus also replaceable.

In another possible embodiment of the invention, the said auxiliary annular elements are designed as substantially rigid rings having external eyes - particularly metal ones - in which the line is inserted and can slide.

The invention will be understood more clearly from an examination of the description and the attached drawing, which provides a practical and non-restrictive illustration of the invention. In the drawing:
Fig. 1 shows a conventional design of float, already illustrated previously;
Figs 2 and 3 show two embodiments of a float according to the invention;
Fig. 4 shows a conventional design of float, which can slide along the line;
Fig. 5 shows an embodiment of a slidable float according to the invention; and
Fig. 6 shows a replaceable "torpedo" weight according to the invention.

In the drawing, some parts are modified as regards their dimensions and/or position, to facilitate understanding of the drawing.

According to the illustration in Fig. 2, a conventional float 21 is improved to make it interchangeable by eliminating the metal eye (5) and using three silicone rings 23, 25, 27 attached with slight friction, one on the upper stick 21A and the other two on the lower stick 21B, the said rings being threaded on the line L and remaining on it to attach, in the same way and successively, different floats, which have sticks of sufficient size to enable the elastic rings 23, 25, 27 to be threaded thereon and retained by friction, with the line L extending externally to and alongside the float.

The upper indicator stick must have a degree of robustness and penetrate to a sufficient depth into the body of the float; there is no reason why the two sticks 21A and 21B may not consist of a single stem passing through and fixed to the body 21C of the float.

By having a set of floats with sticks of the same diameter, it is possible to achieve very rapid interchangeability and a very limited bulk of the equipment.

According to another solution, illustrated in Fig. 3, a rigid collar 33 in the form of a slightly projecting tube, on which the first silicone ring 35 is then placed, is inserted onto and fixed in the upper part of the body 31C of the float 31, the other two rings 37 and 39 being threaded on the lower stick 31B. In this way it also becomes possible to make the indicator stick 31A, which may be inserted with a friction fit into the collar 33, interchangeable, the type and colours of the stick being varied in accordance with the different light conditions, and also enabling the length of the projecting part to be varied as desired.

It should be noted that, for sea fishing - which also takes place at night - a float similar in all respects to that shown in Fig. 1 is commonly used, with the difference that the indicator stick is not fixed in the body of the float, but is simply housed in a cylindrical cavity formed in the upper part of the float body; at nightfall, the stick is removed and the appropriate "starlight", which gives off a chemically produced light, is inserted into the cavity. It will be apparent that with the arrangement in Fig. 3 interchangeability is also provided for the use of the aforesaid stick with a chemically produced light.

Another conventional item of equipment which may be associated with the line is the sliding float, which is used when the depth of water is greater than the length of the rod. As shown in Fig. 4, it has a body 41 from which two eyes 43, 44 project; the line L is inserted and slides in the two metal rings 43, 44, while the float is held at a distance from the hook corresponding to the depth by means of a very small egg-shaped piece of rubber placed there, which may be slidable if necessary, or by a suitable knot, also slidable, made on the line with another small length of nylon or cotton. With these conventional floats also, replacement is not possible while keeping the line whole.

According to the invention, and according to the embodiment illustrated in Fig. 5, a float 51, similar to those defined above, is designed to receive and hold by friction on the extensions 51A and 51B two rings 53, 55, made of carbon, graphite or other material, from which project corresponding metal line guide eyes 53A, 55A, through which the line L is made to pass. These rings 53, 55 may be removed from the float and threaded on another float selected from those which are slidable and capable of being held in position on the line in the conventional way.

In addition to making the various types of float interchangeable, the invention similarly enables the weights to be made interchangeable. At present, weights consisting only of split shot (or cylinders) tightened on the line do not cause any problem if the original float is replaced with one of greater capacity, since it is sufficient to simply add more shot until the exact weight required to match the float is reached. However, problems arise - despite the existence of special pincers for removing the weights - in the reduction of weighting when a float with a capacity lower than the original one is to be matched; the removal of the shot may, in fact, cause damage to the line.

The solution to be implemented according to the invention relates to mixed weighting, consisting of shot or cylinders 12 and a "torpedo" 14 as shown in Fig. 1; the "torpedo" is placed on the line by running the line through the axial hole provided in the said torpedo; the torpedo 14 is generally fixed next to the first shot or cylinder 12 below it.

The torpedo 14 may be made interchangeable by making the line run externally instead of internally with respect to the body of the torpedo 61 (Fig. 6), with means of fixing the said torpedo to the line. For this purpose, use may be made of silicone rings 63 and 65 to be attached to opposite axial extensions 61A and 61B of the body of the torpedo, the line being compressed within the said rings. The torpedo may be initially constructed with the two thin cylindrical extensions; alternatively, the torpedo may be constructed with a central hole in which a stick is then fixed - made of metal, graphite, or plastic - both ends of which project. Attachment to the line is carried out by means of the two silicone rings. In addition to the interchangeability a further advantage is obtained in that the torpedo may easily be moved along the line, and may be fixed by the retaining action of the silicone rings.

It is to be understood that the drawing shows only an illustration provided solely as a practical demonstration of the invention, this invention being capable of varying in its forms and dispositions without thereby departing from the scope of the guiding concept of the invention. Any reference numbers in the attached claims has the purpose of facilitating the reading of the claims with reference to the description and drawing, and does not limit the scope of protection represented by the claims.

## Claims

1. Angling equipment, comprising the use of components acting as floats and weights on the line, characterised in that, in order to enable a component to be replaced, the line (L) is disposed outside the said component (21, 31, 51, 61); auxiliary annular elements (23, 25, 27; 35, 37, 39; 53, 55; 63, 65) are slidably attached to the line (L); and the said auxiliary annular elements are threaded on extensions (21A, 21B; 33, 31B; 51A, 51B; 61A, 61B) of the component to be mounted on the line from time to time.

2. Equipment according to the preceding claim, characterised in that the said auxiliary annular elements are silicone rings (23, 25, 27; 35, 37, 39; 63, 65) or similar elements, through which the line (L) is made to pass and which are force-threaded on the said-extensions, thus attaching the rings and the component (float, torpedo or other component) without relative sliding.

3. Equipment according to preceding claims, characterised in that at least one of the extensions is a tubular collar (33) which is formed by the component itself or appropriately inserted in the component (31) and in turn forms a holder for the frictional attachment of an indicator stick (31A) or other component.

4. Equipment according to at least Claim 1, characterised in that the said auxiliary annular elements are designed as substantially rigid rings (53, 55) having external eyes (53A, 55A) - particularly metal ones - in which the line (L) is inserted and can slide.

5. Fishing equipment permitting rapid replacement of components - floats, weights, and others - on the line; the whole as described above and shown for illustrative purposes in the attached drawing.
